**Europäisches Patentamt**

**European Patent Office**

**Office européen des brevets**

(19)

(11) Veröffentlichungsnummer : **0 142 537**
**B1**

(12) EUROPÄISCHE PATENTSCHRIFT

(45) Veröffentlichungstag der Patentschrift :
09.09.87

(21) Anmeldenummer : 84901988.0

(22) Anmeldetag : 09.05.84

(86) Internationale Anmeldenummer :
PCT/EP 84/00138

(87) Internationale Veröffentlichungsnummer :
WO/8404506 (22.11.84 Gazette 84/27)

(51) Int. Cl.⁴ : **B 64 F   1/12**

(54) EINRICHTUNG ZUM VERFAHREN VON LUFTFAHRZEUGEN.

(30) Priorität : 10.05.83 DE 3317052

(43) Veröffentlichungstag der Anmeldung :
29.05.85 Patentblatt 85/22

(45) Bekanntmachung des Hinweises auf die Patenterteilung : 09.09.87 Patentblatt 87/37

(84) Benannte Vertragsstaaten :
FR GB NL

(56) Entgegenhaltungen :
EP-A- 0 047 638
WO-A-83 /014 28
CH-A-   598 132
FR-A- 1 533 975
FR-E-    93 264

(73) Patentinhaber : BLOHM + VOSS AG
Hermann-Blohm Strasse 3
D-2000 Hamburg 11 (DE)

(72) Erfinder : NAUMANN, Herbert
Sandkamp 14
D-2057 Reinbek (DE)

(74) Vertreter : Dipl.-Phys.Dr. Manitz Dipl.-Ing., Dipl.-Wirt-
sch. Finsterwald Dipl.-Chem.Dr. Heyn Dipl.-Phys.
Rotermund Morgan, B.Sc.(Phys.)
Robert-Koch-Strasse 1
D-8000 München 22 (DE)

## Beschreibung

Die Erfindung betrifft eine Einrichtung zum Verfahren von Luftfahrzeugen auf einem Schiffsdeck mit Hilfe von mindestens einem ersten und einem zweiten Seil, wobei das erste Seil auf der einen Seite des Luftfahrzeuges und das zweite Seil auf der anderen Seite des Luftfahrzeuges angreift und die Seile über mindestens einen ggf. versetzbaren Leitblock zu einer ersten bzw. einer zweiten mittels Motoren antreibbaren Windentrommel geführt sind.

Eine derartige Einrichtung ist der EP-A-0 047 638 zu entnehmen. Bei dieser bekannten Einrichtung befinden sich die Windentrommeln, die durch hydraulische Motoren angetrieben werden, an verschiedenen Orten auf dem Schiffsdeck. Die erwünschten Abspul- bzw. Aufspulzugspannungen in den Seilen werden durch hydraulische Steuerungen erreicht, die von einem vermutlich im Sinn der beabsichtigten Bewegung des Luftfahrzeuges bedienbaren Fahrhebel angesteuert werden.

Die bekannte Einrichtung ist aufgrund der verschiedenen Orte der Windentrommeln nicht kompakt und erfordert eine relativ aufwendige Steuerung.

Der Erfindung liegt die Aufgabe zugrunde, eine alternative Ausbildung einer Einrichtung der eingangs genannten Art zu schaffen, die für die Benutzung an Bord von Schiffen für Luftfahrzeuge, insbesondere für Hubschrauber, geeignet ist, um diese auch bei großen Krängungen des Schiffes wahlweise mit konstanter Geschwindigkeit vom Landeplatz auf den Stellplatz und von diesem zum Startplatz zurückzubewegen. Dabei kann z. B. ein Hubschrauber auf seinem Fahrwerk oder mittels eines Transportwagens verfahren werden, indem die Seile von einer besonders ausgebildeten Windenanordnung bedient werden.

Zur Lösung dieser Aufgabe ist erfindungsgemäß vorgesehen, daß die Windentrommeln nebeneinander auf einer gemeinsamen Welle drehbar gelagert sind, daß die Welle mit Wellenzapfen und auf diesen drehbeweglichen mit an den Windentrommeln befestigten Kegelrädern kämmenden und mit diesen ein Differentialgetriebe bildenden Kegelrädern bestückt und von einem ersten Motor antreibbar ist, wobei dieser Motor auf die erste und die zweite Windentrommel ein Drehmoment in gleicher Richtung ausübt, mit dem die vom Luftfahrzeug in entgegengesetzten Richtungen verlaufenden Seile gespannt werden, daß ein zweiter Motor ein Drehmoment auf eine der beiden Windentrommeln in der Drehrichtung ausübt, die zum Aufspulen bzw. zum Abspulen des dieser Windentrommel zugeordneten gespannt gehaltenen Seiles und dadurch zum Verfahren des Luftfahrzeuges erforderlich ist, während die andere Windentrommel durch das Differentialgetriebe ein Drehmoment in entgegengesetzter Drehrichtung erfährt, das zum Abspulen bzw. Aufspulen des vom ersten Motor gespannt gehaltenen Seiles während des Verfahrens erforderlich ist.

Diese Lösung hat den Vorteil, daß, sobald der Hubschrauber mit den Seilen verbunden ist, mittels der Windentrommeln alle angeschlagenen Seile soweit vorgespannt werden, daß bei möglichen Krängungen des Schiffes ein seitliches Versetzen des Hubschraubers auf dem Deck des Schiffes vermieden wird. Nach erfolgter Vorspannung der Seile wird der Hubschrauber mittels der Winden auf seinen vorgegebenen Platz bewegt, wobei auch während des Verfahrens des Hubschraubers die Vorspannung der Seile aufrechterhalten wird. Die von der Winden zum Hubschrauber führenden Seile können auf Deck verlaufen, während die vom Hubschrauber über Umlenkrollen zu den Winden Winden laufenden Seile auf oder unter Deck, im letzteren Fall mittels Rollen aufgehängt zu den Winden geführt werden.

Besondere Ausbildungen der Einrichtung zur Anwendung mit drei oder vier Seilen und einer entsprechenden Zahl von Windentrommeln sind den Unteransprüchen zu entnehmen.

Es soll darauf hingewiesen werden, daß die Verwendung von über Differentialgetrieben gekoppelten Winden bei einer Seil-Verholvorrichtung zur Überführung von Gegenständen von einem Schiff zum anderen bereits aus der FR-A-1 533 975 bekannt ist.

Zu diesem Zweck wird ein Tragseil zwischen den beiden Schiffen aufgehängt und mittels einer besonderen Spanneinrichtung gespannt. Ein erstes Verholseil ist an der einen Seite eines auf dem Tragseil fahrbaren Wagens befestigt, während ein zweites Verholseil an der anderen Seite des Wagens angreift. Sowohl die beiden Verholseile als auch das Tragseil führen zu jeweiligen Winden. Es wird eine Vielzahl von möglichen im allgemeinen komplizierten Anordnungen gezeigt, die teilweise von den Winden getrennte Spanneinrichtungen benötigen und bei denen mehrere Differentialgetriebe zur Anwendung gelangen. Bei keiner der möglichen Ausführungsformen ist jedoch eine Auslegung der Differentialgetriebe gezeigt, die mit den vorliegenden Vorschlägen vergleichbar ist, denn keine der gezeigten Auslegungen zeigt eine Anordnung, bei der zwei Windentrommeln auf eine gemeinsame durchgehende Welle drehbar gelagert sind und von diesen über Wellenzapfen und an den Wellenzapfen drehbar gelagerten und mit an den Windentrommeln befestigten Kegelrädern kämmenden Kegelrädern angetrieben werden, um die Verholseile zu verspannen.

Die Erfindung wird anhand von mehreren zeichnerisch dargestellten Beispielen nachstehend näher erläutert. Es zeigen:

Figur 1 eine Verfahreinrichtung gem. der Erfindung mit zwei Seilen,

Figur 2 eine Einrichtung mit drei Seilen,

Figur 3 eine Einrichtung mit vier Seilen,

Figur 4 eine Einrichtung zur Bedienung zweier Stellplätze,

Figuren 5, 6 und 7 eine Einrichtung mit zwei bzw. drei oder vier Seilen.

Figur 8 Bremseinrichtungen für die Windentrommeln und

Figur 9 verfahrbare Winden.

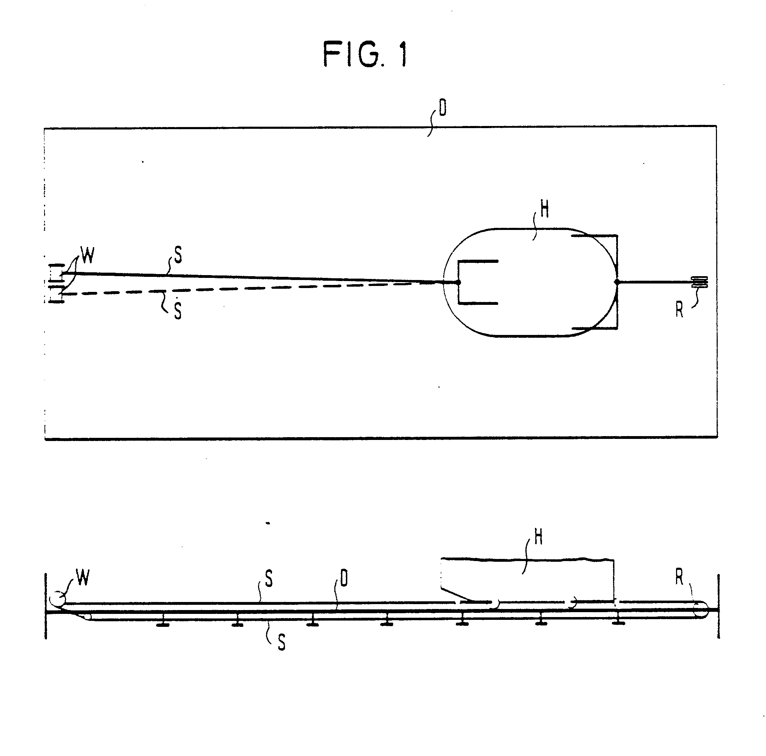

Gemäß Fig. 1 ist — wie in einer Draufsicht und einem Vertikalschnitt gezeigt — durch den Verlauf beider Seile S in einer fast gemeinsamen Achse in der Winde W die Vorspannkraft nur so hoch eingestellt, daß bei Krängungen des Schiffes leichte seitliche Bewegungen des Hubschraubers H auf dem Deck D möglich sind, um die Belastung der Seile S gering zu halten.

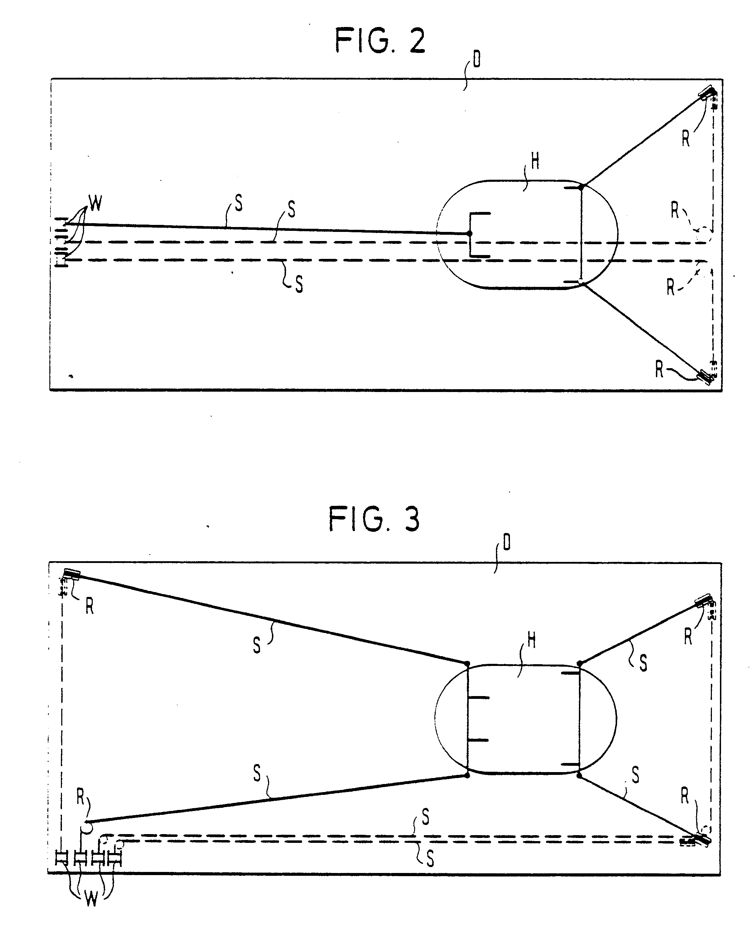

Gemäß Fig. 2 treten nach dem Parallelogramm der Seilkräfte in den Seilen S durch die auf den Hubschrauber H wirkenden Seitenkräfte geringere Kräfte auf, als sie sich bei dem geradlinigen Verlauf der Seile S bei gleicher Seitenkraft bei der Verfahranlage gemäß Fig. 1 einstellen.

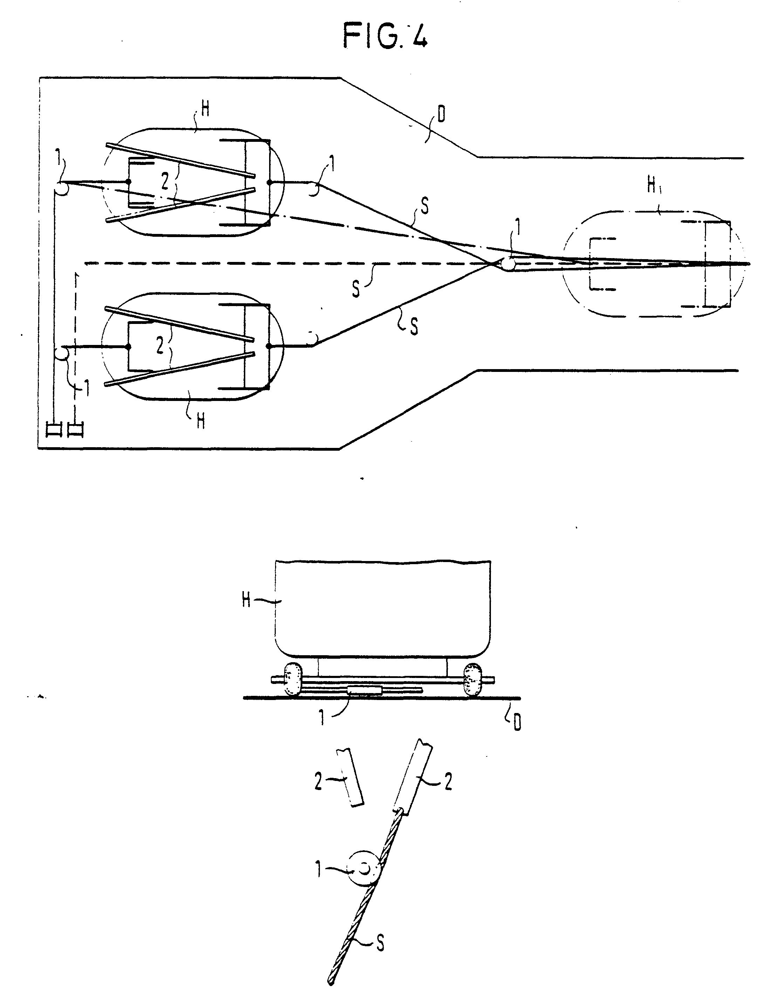

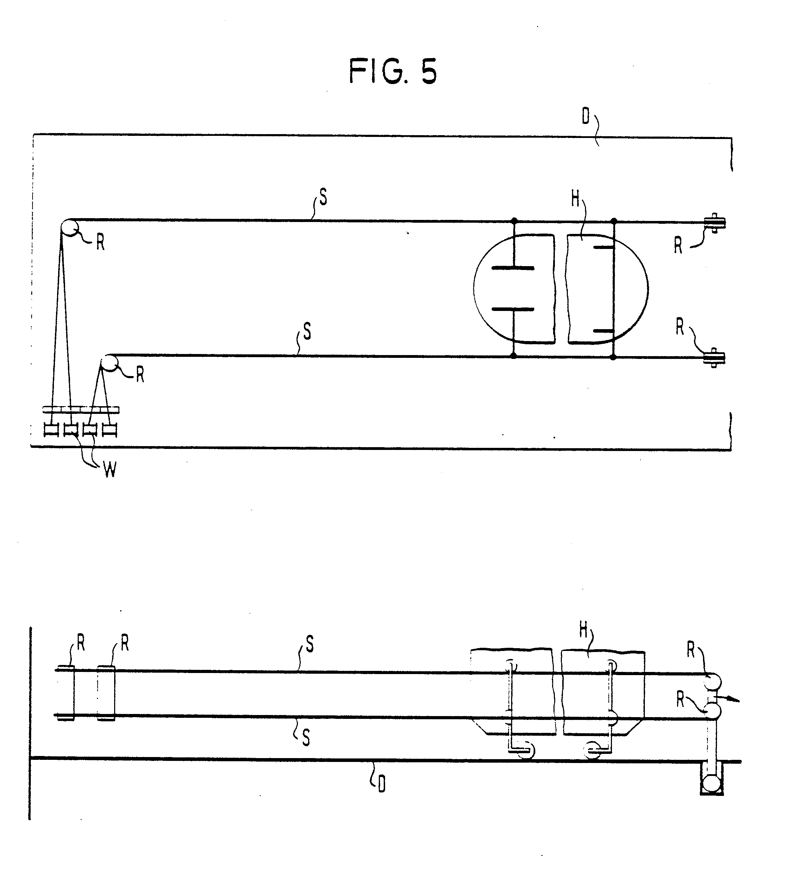

Gemäß Fig. 3 sind die Seilkräfte gegenüber der Verfahranlage nach Fig. 2 noch weiter vermindert. Gemäß Fig. 4 wird, wie aus der Draufsicht und einem Schnitt ersichtlich, die Forderung nach zwei Stellplätzen bei den Verfahranlagen nach Fig. 1, 2 und 3 durch die Anordnung von abnehmbaren Umlenkrollen 1 gelöst, durch deren Anordnung der Verlauf der Seile S geändert werden kann. Weiterhin können unter oder neben dem Hubschrauber H Leitschienen 2 angebracht sein, die auch Kurvenförmig verlaufen können. Gemäß Fig. 5 werden die Seile S über dem Deck D derart geführt, daß sie neben beiden Längsseiten des Hubschraubers H einen Haltezaun bilden. Dazu ist der Hubschrauber H seitlich an den in seiner Bewegungsrichtung laufenden Seilen S befestigt und an den hierzu gegensätzlich verlaufenden Seilen mittels Rollen gegen Kippen gehalten. Der auf dem Deck D des Schiffes aufgestellte Haltezaun mit den Seilrollen R kann nach seiner Verwendung vom Deck D genommen werden, wobei auch die Seilrollen R mit ihrer Halterung in Pfeilrichtung geklappt werden können.

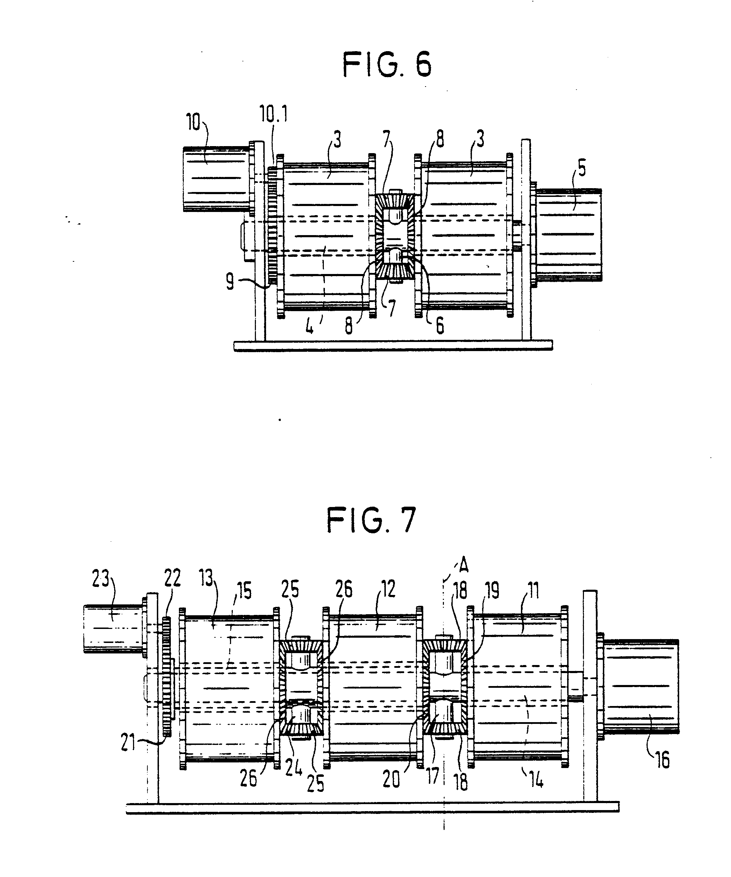

Fig. 6 und 7 stellen für die Verfahreinrichtungen besonders gestaltete Differentialwinden dar, deren Antrieb hydraulisch, elektrisch oder pneumatisch erfolgen kann. Mittels der Differentialwinden werden die zum oder vom Hubschrauber laufenden Seile mit konstanter Kraft gezogen. Die Seile auf den Seiltrommeln sind im gleichen Drehsinn aufgewickelt.

Fig. 6 stellt beispielhaft eine Differentialwinde für die Verfahreinrichtung gemäß Fig. 1 und 4 dar. Die Differentialwinde besitzt zwei Seiltrommeln (3) die auf einer drehbaren Welle (4) gelagert sind, wobei die Welle (4) von dem Motor (5) in der Seilspannrichtung ein Drehmoment erfährt. Mit der Welle (4) fest verbunden sind Wellenzapfen (6) angeordnet, auf welchen Kegelräder (7) gelagert sind, die ihrerseits in Kegelräder (8) greifen, die an den Seiltrommeln (3) befestigt sind. Eine der beiden Seiltrommeln (3) besitzt ein Stirnzahnrad (9), in welches das Ritzel (10.1) des Motors (10) greift, wobei im Gegensatz zum Motor (5) dieser Motor (10) seine Drehrichtung ändern kann.

Die Bedienung und Funktion der Winde ist wie folgt. Bevor ein Hubschrauber verfahren wird, werden die Seile mit dem Hubschrauber an ihren vorgesehenen Befestigungspunkten verbunden. Sind diese Arbeiten erfolgt, wird der Motor (5) eingeschaltet, wobei die Welle (4) sich in der Seilspannrichtung mit den Kegelrädern (7) dreht. Beiderseitig übertragen die Kegelräder auf die Seiltrommeln (3) ein gleichmäßiges Drehmoment, wodurch jede Trommel (3) ihr Seil aufwickelt. Der Motor (10) läuft hierbei frei mit. Ist bei einer derbeiden Seiltrommeln (3) das Seil stramm gezogen, bleibt diese Seiltrommel (3) stehen und die Kegelräder (7) rollen sich an dem nun feststehenden Kegelrad (8) dieser Seiltrommel ab, wodurch die andere Seiltrommel (3) sich weiter dreht, bis auch ihr Seil stramm gezogen ist. Hierdurch kommt der Motor (5) zum Stillstand, übt aber weiterhin über die Kegelräder (7 und 8) auf beide Seiltrommeln (3) in der Seilspannrichtung ein gleichmäßiges Drehmoment aus. Die Größe des Drehmomentes ist so festgelegt, daß auf die Seile eine genügend große Vorspannung ausgeübt wird. Soll nun der Hubschrauber verfahren werden, wird der Motor (10) in der gewünschten Drehrichtung eingeschaltet. Hierdurch wird eine der beiden Trommeln (3) mittels des Zahnrades (9) und des Ritzels (10.1) gedreht und gleichzeitig die andere Trommel (3) in umgekehrter Drehrichtung über die Kegelräder (7 und 8) bewegt. Unter Vorspannung werden die Seile von einer Seiltrommel (3) abgewickelt und von der anderen Seiltrommel (3) aufgewickelt, wobei auch die beim Einsatz von Umlenkrollen durch Schräglauf der Seile auftretenden unterschiedlichen Seilgeschwindigkeiten durch die Kegelräder (7 u. 8) deart ausgeglichen werden, daß sie unter Aufrechterhaltung der Seilvorspannung den Seiltrommeln (3) unterschiedliche Drehgeschwindigkeiten erteilen. Durch diese Wirkungsweisen der Differentialwinde ist ein sicheres Verfahren eines Hubschraubers auch bei großen Krängungen des Schiffes möglich.

Fig. 7 stellt eine Winde dar, welche für die Verfahreinrichtung gem. Fig. 2 vorgesehen ist. Die Winde besitzt drei Seiltrommeln (11, 12 u. 13), wovon Seiltrommel (11) auf der drehbaren Welle (14) gelagert ist, während die Seiltrommeln (12 u. 13) auf einer Hohlwelle (15) gelagert sind, welche ihrerseits auf der Welle (14) gelagert ist. Die Welle (14) erfährt von dem Motor (16) in der Seilspannrichtung ein Drehmoment, welches mittels der mit der Welle (14) fest verbundenen Wellenzapfen (17) und den auf den Wellenzapfen (17) gelagerten Kegelrädern (18) auf die mit der Seiltrommel (11) und der Hohlwelle (15) verbundenen-Kegelräder (19 u. 20) übertragen wird. Auf der Hohlwelle (15) ist ein Stirnzahnrad (21) befestigt, in welches das Ritzel (22) des Motors (23) greift. Weiterhin sind zwischen den Seiltrommeln (12 u. 13) auf der Hohlwelle (15) Wellenzapfen (24) befestigt, auf welchen Kegelräder (25) gelagert sind, die in die an den Seiltrommeln (12 u. 13) befestigten Kegelräder (26) greifen. Die Wirkungsweise dieser Winde ist wie bei der Winde gem. Fig. 6, wenn man die Seiltrommeln (12 u. 13) mit ihrer Hohlwelle (15) als starre Einheit betrachtet. Die Seiltrommeln (12 u. 13) sind für die vom Heck des Schiffes schräg zum Hubschrauber laufenden Seile bestimmt. Mittels der Kegelräder (25 u. 26) wird erzielt, daß die Seiltrommeln (12 u. 13) auch dann gleichmäßig vorgespannt sind, wenn die Seile mit unterschiedlichen Winkeln zur Bewegungsrichtung des Hubschraubers verlaufen. Bei genügend großer Vorspannung der Seile wird der Hubschrauber mittels der durch die Kegelräder (25 u. 26) gekoppelten Seiltrommeln (12 u. 13) so gestellt, daß die beiderseitig vom Heck des Schiffes zum Hubschrauber laufenden Seile zur Bewegungsrichtung des Hubschraubers einen gleichen Neigungswinkel aufweisen.

Die Winde für die Verfahreinrichtung gem. Fig. 3 besitzt vier Seiltrommeln, wobei die Winde wie der links von der Achse A befindliche Teil der Winde gem. Fig. 7 ausgeführt und zur Achse A symmetrisch ausgebildet ist. Hierbei kann jedoch auf einen weiteren Motor (23) für den Antrieb der Hohlwelle (15) rechts von der Achse A verzichtet werden. Die Seile sind so angeordnet, daß die beiden links oder rechts von der Symmetrieachse A angeordneten Seiltrommeln (12 u. 13) Seile aufnehmen, welche eine gemeinsame Kraftrichtung in der Bewegungsrichtung des Hubschraubers besitzen.

Gemäß der Erfindung können die Seiltrommeln der Winden einzeln gebremst werden, wodurch es ermöglicht wird, bei einer Seilanordnung gemäß Fig. 2 und Fig. 3 den Hubschrauber nicht nur in seiner Längsachse sondern auch hierzu quer zu verfahren und auch den Hubschrauber schräg zu stellen.

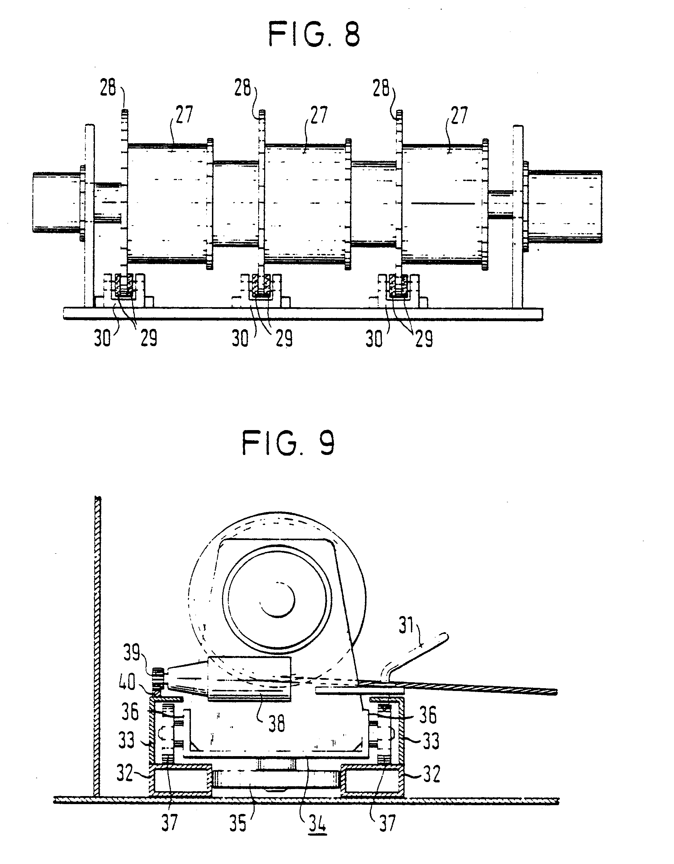

Fig. 8 stellt eine Winde dar, bei welcher jede Seiltrommel (27) eine in ihrem Durchmesser vergrößerte Wange (28) besitzt, die auf beiden Stirnflächen eine Reibfläche mit Bremsklötzen (29) besitzt. Die Bremsklötze (29) sind in einem gabelförmigen Halter (30) befestigt, welcher auch die Anpreßvorrichtung für die Bremsklötze (29) aufweist. Die Bremsklötze (29) können auf mechanische hydraulische, elektrische oder pneumatische Weise betätigt werden. Bei einer hydraulischen Betätigung können die Druckkolben für die Bremsklötze (29) über ein Schaltventil von einer zu den Motoren der Winde führenden Druckleitung betätigt werden. Aus Sicherheitsgründen werden die Bremsklötze (29) bei einer hydraulischen Anlage mittels Federkraft angepreßt und mittels hydraulischem Druck gelüftet, so daß bei einer Störung in der hydraulischen Anlage die Winden selbsttätig gebremst werden. Dabei wird der Hubschrauber weiterhin mittels der Seile gehalten. Für die Lüftung der Bremsklötze im Notfall ist eine hydraulische Handpumpe vorgesehen. Für die Bedienung der Verfahranlage ist ein Steuerpult vorgesehen, welches Steuerventile aufweist, die mittels eines Steuerknüppels gesteuert werden. Die Steuerventile sind so mit dem Steuerknüppel gekoppelt, daß sich der zu verfahrende Hubschrauber entsprechend der Stellung des Steuerknüppels bewegt, wobei die Seiltrommeln während ihrer Rotation automatisch über die Ventile gebremst werden. Weiterhin kann über Seiltaster und Drehmomentmeßgeräte bei einem Seilriß automatisch eine Bremsung der von einem Seilriß betroffenen Seiltrommel eingeleitet werden. Um auf Schiffen mehrere Hubschrauber vom Landegrill auf ihre Stellplätze und zurück zu verfahren, kann die hierfür notwendige Anordnung von Umlenkrollen dadurch vermieden werden, daß die Winde selbst verfahrbar ausgeführt ist. Fig. 9 stellt eine Differentialwinde, welche mittels Rollen auf einem hierfür besonders gestalteten Schienensystem verfahrbar ist und welche auf ihren Arbeitspunkten mittels eines Steckbolzens (31) festgestellt wird. Das Schienensystem besteht aus zwei zueinander spiegelbildlich verlaufenden Schienen, welche aus einem auf dem Schiffsdeck befestigten Flachstab oder einem Rechteck-Hohlprofil (32) gebildet sind, auf welchem ein U- oder Winkelprofil (33) befestigt ist. Während unter der Grundplatte (34) der Winde horizontal angebrachte Rollen (35) durch die Flachstäbe oder Rechteck-Hohlprofile (32) geführt sind, sind an den Stirnseiten oder an Abkantungen (36) der Grundplatte (34) vertikal Rollen (37) angebracht, die in den inneren im U-Profil oder durch den Flachstab bzw. durch das Rechteck-Hohlprofil mit dem Winkelprofil (33) gebildeten Raum laufen. Weiterhin kann die Differentialwinde einen Fahrmotor (38) mit eingebauter Bremse aufweisen, welcher die Differentialwinde mittels seines Ritzels (39) und einer am Schienensystem befestigten Zahnstange (40) auch unter Seillast bewegen kann. Das Fahren und Bremsen wird vom Steuerpult veranlaßt.

Bezugszeichenliste

1 Umlenkrolle
2 Leitschiene
3 Windentrommel
4 Welle
5 Motor
6 Wellenzapfen
7 Kegelräder
8 Kegelräder
9 Stirnzahnrad
10 Motor
10.1 Ritzel
11 Seiltrommel
12 Seiltrommel
13 Seiltrommel
14 Welle
15 Hohlwelle
16 Motor
17 Wellenzapfen
18 Kegelräder
19 Kegelräder
20 Kegelräder
21 Stirnzahnrad
22 Ritzel
23 Motor

24 Wellenzapfen
25 Kegelräder
26 Kegelräder
27 Seiltrommel
28 Wange
29 Bremsklötze
30 Halter
31 Steckbolzen
32 Rechteck-Hohlprofil
33 Winkelprofil
34 Gundplatte
35 Rollen
36 Abkantungen
37 Rollen
38 Fahrmotor
39 Ritzel
40 Zahnstange
H Hubschrauber
D Deck des Schiffes
W Winde
R Umlenk- bzw. Tragrolle
S Seil

## Patentansprüche

1. Einrichtung zum Verfahren von Luftfahrzeugen (H) auf einem Schiffsdeck (D) mit Hilfe von mindestens einem ersten und einem zweiten Seil (S), wobei das erste Seil auf der einen Seite des Luftfahrzeuges (H) und das zweite Seil auf der anderen Seite des Luftfahrzeuges (H) angreift und die Seile über mindestens einen ggf. versetzbaren Leitblock (R) zu einer ersten bzw. einer zweiten mittels Motoren antreibbaren Windentrommel (3 ; 11, 12) geführt sind, dadurch gekennzeichnet, daß die Windentrommeln (3 ; 11, 12) nebeneinander auf einer gemeinsamen Welle (4 ; 14) drehbar gelagert sind, daß die Welle (4 ; 14) mit Wellenzapfen (6 ; 17) und auf diesen drehbeweglichen mit an den Windentrommeln (3 ; 11, 12) befestigten Kegelrädern (8 ; 19, 20) kämmenden und mit diesen ein Differentialgetriebe bildenden Kegelrädern (7 ; 18) bestückt und von einem ersten Motor (5 ; 16) antreibbar ist, wobei dieser Motor (5 ; 16) auf die erste und die zweite Windentrommel (3 ; 11, 12) ein Drehmoment in gleicher Richtung ausübt, mit dem die vom Luftfahrzeug in entgegengesetzten Richtungen verlaufenden Seile (S) gespannt werden, daß ein zweiter Motor (10 ; 23) ein Drehmoment auf eine der beiden Windentrommeln (3 ; 12) in der Drehrichtung ausübt, die zum Aufspulen bzw. zum Abspulen des dieser Windentrommel zugeordneten gespannt gehaltenen Seiles (S) und dadurch zum Verfahren des Luftfahrzeuges (H) erforderlich ist, während die andere Windentrommel (3 ; 11) durch das Differentialgetriebe ein Drehmoment in entgegengesetzter Drehrichtung erfährt, das zum Abspulen bzw. Aufspulen des vom ersten Motor (5 ; 16) gespannt gehaltenen Seiles während des Verfahrens erforderlich ist.

2. Einrichtung nach Anspruch 1 mit drei Seilen (S), wobei zwei Seile auf der einen Seite des Luftfahrzeuges angreifen, während ein Seil auf der anderen Seite des Luftfahrzeuges (H) angreift, und mit drei Windentrommeln (11, 12, 13), dadurch gekennzeichnet, daß die drei Windentrommeln (11, 12, 13) unter Anwendung von entsprechend angeordneten Leitblöcken (R) nebeneinander angeordnet sind ; daß auf der Welle (14) ein Hohlwelle (15) drehbar gelagert ist, wobei die zweite und die dritte Windentrommel (12, 13) auf der Hohlwelle (15) drehbar gelagert sind, und daß das bei einer Ausführung mit nur zwei Windentrommeln an der zweiten Windentrommel befestigte Kegelrad (20) stattdessen an der Hohlwelle (15) befestigt ist, daß die Hohlwelle (15) Wellenzapfen (24) mit drehbeweglichen Kegelrädern (25) aufweist, die mit an den auf der Hohlwelle (15) drehbar gelagerten Windentrommeln (12, 13) befestigten Kegelrädern (26) in Eingriff stehen, und ein zweites Differentialgetriebe bilden ; daß der erste Motor (16) über die Welle (14) und das erste Differentialgetriebe auf die Hohlwelle (15) mit den zweiten und dritten Windentrommeln (12, 13) und auf die erste Windentrommel (11) ein Drehmoment in gleicher Drehrichtung ausübt, mit dem die vom Luftfahrzeug in entgegengesetzten Richtungen verlaufenden Seile gespannt werden, wobei der zweite Motor (23) leer mitläuft ; und daß zum Verfahren des Luftfahrzeuges der zweite Motor (23) ein Drehmoment auf die Hohlwelle (15) mit den zwei Windentrommeln (12, 13) in der Drehrichtung ausübt, die zum Abspulen der gespannt gehaltenen Seile und dadurch zum Verfahren des Luftfahrzeuges erforderlich ist, während die erste Windentrommel (11) durch das erste Differentialgetriebe ein Drehmoment in entgegengesetzter Drehrichtung erfährt, das zum Aufspulen des vom ersten Motor (16) gespannt gehaltenen Seiles während des Verfahrens erforderlich ist.

3. Einrichtung nach Anspruch 1 mit vier Seilen, wobei zwei Seile auf der einen Seite des Luftfahrzeuges und zwei Seile auf der anderen Seite des Luftfahrzeuges angreifen, und mit vier Windentrommeln, dadurch gekennzeichnet, daß die vier Windentrommeln unter Anwendung von entsprechend angeordneten Leitblöcken nebeneinander angeordnet sind ; daß die vierte Windentrommel und die erste Windentrommel nebeneinander auf einer ersten auf der Welle drehbar gelagerten Hohlwelle drehbar gelagert sind ; daß die zweite und dritte Windentrommel nebeneinander auf einer zweiten auf der Welle drehbar gelagerten Hohlwelle drehbar gelagert sind ; daß die bei einer Einrichtung mit zwei Windentrommeln an diesen befestigten Kegelräder des ersten Differentialgetriebes nunmehr an der ersten bzw. der zweiten Hohlwelle befestigt sind, daß ein zweites Differentialgetriebe zwischen der ersten und der vierten Windentrommel angeordnet ist und aus zwei jeweils an einer Windentrommel befestigten und mit auf von der ersten Hohlwelle getragenen Wellenzapfen drehbar gelagerten Kegelrädern Kämmenden Kegelrädern besteht, daß ein drittes Differentialgetriebe zwischen der zweiten und der dritten Windentrommel angeordnet ist und aus zwei jeweils an einer Windentrommel befestigten und mit auf von der zweiten Hohlwelle getragenen Wellenzapfen drehbar gelagerten Kegelrädern kämmenden Kegelrädern besteht, daß der erste Motor die Welle antreibt, und dadurch die vom Luftfahrzeug in entgegengesetzten Richtungen verlaufenden Seile spannt, wobei der zweite Motor leer mitläuft, und daß zum Verfahren des Luftfahrzeuges der zweite Motor ein Drehmoment auf die zweite Hohlwelle in der Drehrichtung ausübt, die zum Aufspulen der gespannt gehaltenen Seile und dadurch zum Verfahren des Luftfahrzeuges erforderlich ist, während die erste Hohlwelle mit den zwei Windentrommeln durch das erste Differentialgetriebe mit den Kegelrädern ein Drehmoment in entgegengesetzter Drehrichtung erfährt, das zum Abspulen der vom ersten Motor gespannt gehaltenen Seile während des Verfahrens erforderlich ist.

4. Einrichtung nach einem der Ansprüche 1 bis 3, dadurch gekennzeichnet, daß die Windentrommeln (27) mit Hilfe von auf vergrößerte Trommelwangen (28) beiderseits wirksamen mechanisch, hydraulisch, pneumatisch oder elektrisch betätigten Bremsklötzen (29) einzeln abbremsbar sind.

5. Einrichtung nach den Ansprüchen 1 bis 4, dadurch gekennzeichnet, daß für die Windentrommel ein Steuerpult mit einem Fahrhebel vorgesehen ist, der mittels einer Bewegung in seiner Längsrichtung, z. B. durch Niederdrücken gegen eine Feder, die Bremsanlage lüftet und dann mittels Bewegungen in seiner Querrichtung das Spannen der Seile und das Verfahren des Luftfahrzeuges in den vorgesehenen Bewegungsrichtungen steuert, wogegen beim Loslassen des Fahrhebels das Verfahren des Luftfahrzeuges ausgeschaltet und die Bremsanlage eingeschlatet wird.

6. Einrichtung nach einem der vorhergehenden Ansprüche 1 bis 4, dadurch gekennzeichnet, daß die Windentrommeln durch einen im Sinne der beabsichtigten Bewegungen des Luftfahrzeuges bedienbaren Fahrhebel steuerbar sind.

7. Einrichtung nach einem der Vorhergehenden Ansprüche, dadurch gekennzeichnet, daß die Windentrommeln auf einem Wagen abgestützt sind, der auf einem am Schiffsdeck angebrachten Schienensystem (32, 33) verfahrbar (Räder 35, 37) und feststellbar (Steckbolzen 31) ist.

**Claims**

1. Apparatus for moving aircraft (H) on a ship's deck (D) with the aid of at least a first and a second cable (S), with the first cable engaging on the one side of the aircraft (H), and the second able engaging on the other side of the aircraft (H) and with the cables being guided over at least one optionally displaceable guide block (R) to first and second winch drums (3 ; 11, 12) respectively, which are drivable by means of motors, characterised in that the winch drums (3 ; 11, 12) are rotatably journalled alongside one another on a common shaft (4 ; 14) ; in that the shaft (4 ; 14) is equipped with shaft spigots (6 ; 17) and bevel gears (7 ; 18) which are rotatably mounted thereon, which mesh with bevel gears (8 ; 19, 20) secured to the winch drums (3 ; 11, 12) and which form a differential transmission with the bevel gears secured to the winch drums, the shaft being drivable by a first motor (5 ; 16), with this motor (5 ; 16) exerting a torque in the same direction on the first and on the second winch drums (3 ; 11, 12) by means of which the cables (S) extending in opposite directions away from the aircraft are tensioned ; in that a second motor (10 ; 23) exerts a torque on one of the two winch drums (3 ; 12) in a direction of rotation which is required to reel in or reel out the tensioned cable (S) associated with this winch drum and thereby to move the aircraft (H), while the other winch drum (3 ; 11) experiences, via the differential transmission, a torque in the opposite direction which is necessary to reel out and reel in the cable which is held tensioned by the first motor (5 ; 16) during the movement.

2. Arrangement in accordance with claim 1 with three cables (S), in which two cables engage on the one side of the aircraft while one cable engages of the other side of the aircraft (H), and with three winch drums (11, 12, 13), characterised in that the three winch drums (11, 12, 13) are arranged alongside one another by using correspondingly disposed guide pulleys (R) ; in that a hollow shaft (15) is rotatably mounted on the shaft (14), with the second and third winch drums (12, 13) being rotatably mounted on the hollow shaft (15) ; in that the bevel gear (20) which is secured in an embodiment with only two winch drums to the second winch drum is instead secured to the hollow shaft (15) ; in that the hollow shaft (15) has shaft stubs (24) with rotatably movable bevel gears (25) which engage with bevel gears (26) secured to the winch drums (12, 13) which are rotatably mounted on the hollow shaft (15) and form a second differential transmission ; in that the first motor (16) exerts via the first differential transmission a torque in the same direction of rotation on the hollow shaft (15) with the second and third winch drums (12, 13) and on the first winch drum (11) by means of which the cables extending in opposite directions from the aircraft are tensioned, with the second motor (23) running therewith without being energized ; and in that for movement of the aircraft the second motor (23) exerts a torque on the hollow shaft (15) with the two winch drums (12, 13) in the direction of rotation which is necessary to reel out the tensioned cables and thereby to move the aircraft, while the first winch drum (11) experiences, via the first differential transmission, a torque in the opposite direction of rotation which is necessary to reel in the cable which is held tensioned by the first motor (16) during the movement.

3. Arrangement in accordance with claim 1 with four cables in which two cables engage on the one side of the aircraft and two cables engage on the other side of the aircraft, and with four winch drums, characterised in that the four winch drums are arranged alongside one another by using correspondingly disposed guide pulleys ; in that the fourth winch drum and the first winch drum are rotatably disposed alongside one another on a hollow shaft rotatably mounted on the shaft ; in that the second and third winch drums are rotatably mounted alongside one another on a second hollow shaft rotatably mounted on said shaft ; in that the bevel gears of the first differential transmission which are secured in an arrangement with two winch drums to the latter are now secured to the first and to the second hollow shafts, respectively ; in that a second differential transmission is arranged between the first and the fourth winch drum and consists of two bevel gears which are respectively mounted on one winch drum and mesh with bevel gears rotatably mounted on shaft spigots carried by the first hollow shaft ; in that a third differential transmission is arranged between the second and the third winch drum and consists of two bevel gears which are respectively fastened to one winch drum and mesh with bevel gears which are rotatably mounted on shaft spigots carried by the second hollow shaft ; in that the first motor drives the shaft and thereby tensions the cables extending in opposite directions from the aircraft, with the second motor running without being energized ; and in that to move the aircraft the second motor exerts a torque on the second hollow shaft in the direction of rotation which is required to reel in the tensioned cables and thereby move the aircraft while the first hollow shaft with the two winch drums experiences via the first differential transmission with the bevel gears a torque in the opposite direction of rotation which is required to reel out the cables which are kept tensioned by the first motor during the movement.

4. Apparatus in accordance with one of the claims 1 to 3, characterized in that the winch drums (27) can be individually braked with the aid of mechanically, hydraulically, pneumatically or electrically operated brake pads (29) which act on both sides of enlarged drum cheeks (28).

5. Arrangement in accordance with the claims 1 to 4, characterized in that a control console with a joystick is provided for the winch drums with the joystick ventilating the brake installation by means of a movement in its longitudinal direction, for example by depressing it against a spring, and then controlling the tensioning of the cables and the movement of the aircraft in the directions of movement which are provided by means of movements in its transverse direction, whereas on releasing the joystick the movement of the aircraft is stopped and the braking system is engaged.

6. Arrangement in accordance with one of the preceding claims 1 to 4, characterized in that the winch drums are controllable by a joystick which can be operated in the sense of the intended movements of the aircraft.

7. Arrangement in accordance with one of the preceding claims, characterized in that the winch drums are supported on a carriage which is movable (wheels 35, 37) and securable (socket pin 31) on a rail system (32, 33) attached to the ship's deck.

## Revendications

1. Installation pour déplacer des aéronefs (H) sur le pont (D) d'un navire à l'aide d'au moins des premier et deuxième câbles (S), ces premier et deuxième câbles étant respectivement en prise avec l'un des côtés de l'aéronef (H) et avec l'autre côté de cet aéronef (H), lesdits câbles étant guidés, par l'intermédiaire d'au moins un bloc de guidage (R) éventuellement décalable, vers des premier et deuxième tambours respectifs de treuillage (3 ; 11, 12) pouvant être entraînés au moyen de moteurs, installation caractérisée par le fait que les tambours de treuillage (3 ; 11, 12) sont calés à rotation en juxtaposition sur un arbre commun (4 ; 14) ; par le fait que l'arbre (4 ; 14) est équipé de tourillons d'arbre (6 ; 17) et de pignons coniques (7 ; 18) qui peuvent tourner sur ces tourillons et qui engrènent, en formant un train d'engrenages différentiel, dans des pignons coniques (8 ; 19, 20) fixés aux tambours de treuillage (3 ; 11, 12), et peut être entraîné par un premier moteur (5 ; 16), ce moteur (5 ; 16) appliquant dans la même direction, aux premier et deuxième tambours de treuillage (3 ; 11, 12), un couple de rotation par lequel les câbles (S) s'étendant dans des sens opposés à partir de l'aéronef sont tendus ; et par le fait qu'un second moteur (10 ; 23) applique un couple de rotation à l'un des deux tambours de treuillage (3 ; 12), dans le sens de rotation nécessaire pour provoquer respectivement l'enroulement ou le déroulement du câble (S) maintenu tendu et associé à ce tambour de treuillage, et par conséquent nécessaire pour déplacer l'aéronef (H), tandis que l'autre tambour de treuillage (3 ; 11) subit dans le sens de rotation opposé, par l'intermédiaire du train d'engrenages différentiel, un couple de rotation qui est respectivement nécessaire, au cours du déplacement, pour dérouler ou enrouler le câble maintenu tendu par le premier moteur (5 ; 16).

2. Installation selon la revendication 1, munie de trois câbles (S) parmi lesquels deux câbles sont en prise avec l'un des côtés de l'aéronef tandis qu'un câble est en prise avec l'autre côté de cet aéronef (H), ainsi que de trois tambours de treuillage (11, 12, 13), installation caractérisée par le fait que les trois tambours de treuillage (11, 12, 13) sont disposés en juxtaposition, par l'utilisation de blocs de guidage (R) occupant des positions correspondantes ; par le fait qu'un arbre creux (15) est monté rotatif sur l'arbre (14), les deuxième et troisième tambours de treuillage (12, 13) étant calés à rotation sur cet arbre creux (15) ; par le fait que le pignon conique (20), fixé au deuxième tambour de treuillage dans une réalisation comprenant seulement deux tambours de treuillage, est fixé à la place de l'arbre creux (15) ; par le fait que cet arbre creux (15) présente des tourillons d'arbre (24) à pignons coniques rotatifs (25) qui engrènent des pignons coniques (26) fixés aux tambours de treuillage (12, 13) calés à rotation sur l'arbre creux (15), et qui forment un deuxième train d'engrenages différentiel ; par le fait que le premier moteur (16) applique à l'arbre creux (15) muni des deuxième et troisième tambours de treuillage (12, 13) et au premier tambour de treuillage (11), par l'intermédiaire de l'arbre (14) et du premier train d'engrenages différentiel, un couple de rotation dans le même sens ayant pour effet de tendre les câbles s'étendant dans des sens opposés à partir de l'aéronef, cependant que le second moteur (23) tourne à vide ; et par le fait que, pour déplacer l'aéronef, le second moteur (23) applique, à l'arbre creux (15) muni des deux tambours de treuillage (12, 13), un couple de rotation dans la direction nécessaire pour dérouler les câbles maintenus tendus, et par conséquent nécessaire pour déplacer l'aéronef, tandis que le premier tambour de treuillage (11) subit dans le sens de rotation opposé, par l'intermédiaire du premier train d'engrenages différentiel, un couple de rotation nécessaire pour enrouler, au cours du déplacement, le câble maintenu tendu par le premier moteur (16).

3. Installation selon la revendication 1, munie de quatre câbles parmi lesquels deux câbles sont en prise avec l'un des côtés de l'aéronef et deux câbles sont en prise avec l'autre côté de cet aéronef, ainsi que de quatre tambours de treuillage, installation caractérisée par le fait que les quatre tambours de treuillage sont agencés en juxtaposition, par l'utilisation de blocs de guidage occupant des positions correspondantes ; par le fait que le quatrième tambour de treuillage et le premier tambour de treuillage sont calés à rotation, l'un à côté de l'autre, sur un premier arbre creux monté rotatif sur l'arbre ; par le fait que les deuxième et troisième tambours de treuillage sont calés à rotation, l'un à côté de l'autre, sur un second arbre creux monté rotatif sur l'arbre ; par le fait que les pignons coniques du premier train d'engrenages différentiel, fixés aux tambours de treuillage dans une installation comprenant deux tambours de ce type, sont à présent fixés au premier ou au second arbre creux, respectivement ; par le fait qu'un deuxième train d'engrenages différentiel est intercalé entre les premier et quatrième tambours de treuillage, et se compose de deux pignons coniques qui sont respectivement fixés à un tambour de treuillage et qui engrènent dans des pignons coniques montés rotatifs sur des tourillons d'arbre portés par le premier arbre creux ; par le fait qu'un troisième train d'engrenages différentiel est intercalé entre les deuxième et troisième tambours de treuillage, et se compose de deux pignons coniques qui sont respectivement fixés à un tambour de treuillage et qui engrènent dans des pignons coniques montés rotatifs sur des tourillons d'arbre portés par le second arbre creux ; par le fait que le premier moteur entraîne l'arbre et tend par conséquent les câbles s'étendant dans des sens opposés à partir de l'aéronef, cependant que le second moteur tourne à vide ; et par le fait que, pour déplacer l'aéronef, le second moteur applique au second arbre creux un couple de rotation dans la direction qui est nécessaire à l'enroulement des câbles maintenus tendus et est par conséquent nécessaire au déplacement de l'aéronef, tandis que le premier arbre creux muni de deux tambours de treuillage subit dans le sens de rotation opposé, par l'intermédiaire du premier train d'engrenages différentiel pourvu des pignons coniques, un couple de rotation qui est nécessaire, au cours du déplacement, pour dérouler les câbles maintenus tendus par le premier moteur.

4. Installation selon l'une des revendications 1 à 3, caractérisée par le fait que les tambours de treuillage (27) peuvent être freinés individuellement à l'aide de sabots de freinage (29) qui agissent de part et d'autre sur des flasques de tambour surdimensionnées (28), et sont actionnés mécaniquement, hydrauliquement, pneumatiquement ou électriquement.

5. Installation selon les revendications 1 à 4, caractérisée par le fait qu'il est prévu, pour le tambour de treuillage, un pupitre de commande muni d'un levier de marche qui, par un mouvement dans sa direction longitudinale, par exemple par enfoncement à l'encontre d'un ressort, désaère l'installation de freinage pour commander ensuite, par des mouvements dans sa direction transversale, la tension des câbles et le déplacement de l'aéronef dans les directions de mouvement prévues, le relâchement de ce levier de marche s'accompagnant, en revanche, d'une interruption du déplacement de l'aéronef et d'un enclenchement de l'installation de freinage.

6. Installation selon l'une des précédentes revendications 1 à 4, caractérisée par le fait que les tambours de treuillage peuvent être commandés par l'intermédiaire d'un levier de marche actionnable dans le sens des mouvements prévus de l'aéronef.

7. Installation selon l'une des revendications précédentes, caractérisée par le fait que les tambours de treuillage sont en appui sur un chariot, qui est mobile (roues 35, 37) et arrêtable (goupille enfichable 31) sur un système à rails (32, 33) installé sur le pont du navire.

# FIG. 1

# FIG. 2

# FIG. 3

0 142 537

# FIG. 4

# FIG. 5

# FIG. 6

# FIG. 7

# FIG. 8

# FIG. 9